# FASCICULE DE BREVET EUROPEEN

(11) **EP 2 199 165 B1**
(45) Date de publication et mention de la délivrance du brevet: **03.04.2013**
(21) Numéro de dépôt: 09178056.9
(22) Date de dépôt: 04.12.2009
(51) Int. Cl.: B60T 11/236, F16J 15/32

(54) **Joint à lèvres de maître cylindre d'un circuit de freinage.**
Lippendichtung für Hauptbremszylinder
Lip seal for brake master cylinder

(30) Priorité: 19.12.2008 FR 0807183
(43) Date de publication de la demande: 23.06.2010
(73) Titulaire: Robert Bosch GmbH, 70442 Stuttgart (DE)
(72) Inventeur: Auguste, Antony, 94350, Villier Sur Marne (FR); Bernadat, Olivier, 94170, LE PERREUX (FR); Gaffe, François, 93140, BONDY (FR); Lhuillier, Laurent, 93150, LE BLANC MESNIL (FR)

(56) Documents cités:
- DE-B3-102006 040 487
- US-A1- 2005 115 237
- US-B1- 6 272 858

## Description

La présente invention concerne un maître cylindre d'un circuit de freinage, en particulier pour véhicule automobile.

Les véhicules automobiles comportent une commande de freinage comprenant en général une pédale de frein agissant sur un maître cylindre, pour transmettre par un circuit hydraulique une pression de fluide à des récepteurs freinant les différentes roues.

Le maître cylindre comprend un piston coulissant axialement dans un corps comportant un joint d'étanchéité à lèvre qui s'applique sur le piston, pour séparer un volume arrière contenant une réserve de liquide à pression atmosphérique, d'un volume avant comprenant une chambre mise en pression par le déplacement de ce piston.

Un maître cylindre de ce type décrit dans le document US-B1-6272858, est équipé d'un joint circulaire à deux lèvres. La lèvre interne du joint enserre le piston en assurant une étanchéité dynamique et vient, quand le piston est au repos en position arrière, dans une gorge de ce piston ayant une profondeur réduite et des parois latérales faiblement inclinées.

Dans cette position du piston au repos, un perçage radial formé dans le piston débouche dans la gorge en arrière de la lèvre interne du joint, pour mettre en communication la chambre de pression et la réserve de liquide, et si nécessaire réajuster le volume du circuit hydraulique.

Le joint à lèvres est calé axialement dans un logement annulaire du corps autour du piston et comporte une lèvre externe qui s'appuie sur une paroi cylindrique externe de ce logement, pour assurer une étanchéité statique entre la chambre de pression et le volume arrière.

Le joint comporte de plus une face arrière plane qui s'appuie sur une face arrière transversale plane du logement annulaire, pour assurer un calage axial du joint dans le logement.

Les véhicules automobiles peuvent comporter des systèmes d'aide à la conduite qui freinent certaines roues du véhicule, pour par exemple corriger des écarts de trajectoires dans le cas des systèmes ESP.

Dans ce cas, le système peut faire un appel rapide et important de liquide dans le circuit de freinage, qui est aspiré au travers du maître cylindre pour alimenter des freins des roues, à partir de la réserve de liquide de freinage. Le liquide doit alors rapidement passer par les lèvres du joint annulaire, qui se soulèvent du fait de la dépression causée en aval.

Dans une disposition connue, la face arrière du joint annulaire comporte des rainures radiales qui s'étendent sur toute la hauteur du joint, de manière à permettre un passage de liquide radialement vers l'extérieur, entre le joint annulaire et la face arrière plane du logement du corps.

Lors d'une demande de liquide dans le circuit de freinage, le liquide emprunte les rainures radiales pour rejoindre la lèvre externe, et alimente par ce passage le circuit de freinage.

Dans le cas d'un joint annulaire produit par moulage, un procédé connu de fabrication du moule consiste à usiner par électroérosion la surface du moule correspondant à la face arrière du joint annulaire, comprenant les surfaces d'appui et les rainures, au moyen d'une électrode d'un seul tenant.

Un inconvénient principal de ce procédé, compte tenu des dispersions dans les cotes de fabrication, est que l'électrode peut ne pas être positionnée de façon précise par rapport aux parties du moule réalisées préalablement par tournage, ce qui peut créer des fuites dans le joint annulaire au niveau des lignes de raccordement entre les surfaces créées par tournage et celles créées par électroérosion, dans le cas où ces lignes se trouvent sur une surface d'étanchéité dynamique.

Un autre maître cylindre comportant un joint annulaire substantiellement selon la préambule de la revendication 1 est connu du document DE 10 2006 040 487 B3.

La présente invention a notamment pour but d'éviter ces inconvénients de la technique antérieure, et d'apporter à la réalisation d'un joint à lèvres de maître cylindre, une solution simple et efficace permettant de garantir une bonne étanchéité.

Elle propose à cet effet un maître cylindre d'un circuit hydraulique de freinage, en particulier pour véhicule automobile, comportant un piston coulissant axialement dans un corps comprenant un joint annulaire d'étanchéité à lèvres, séparant un volume arrière contenant une réserve de liquide, d'un volume avant comprenant une chambre de mise en pression, ce joint comportant une lèvre interne d'étanchéité dynamique enserrant le piston et raccordée par une surface incurvée à une face arrière plane comprenant des canaux radiaux et venant en appui sur une face arrière transversale du logement du joint, **caractérisé en ce que** les canaux radiaux sont définis par des pavés formés en saillie sur la face arrière du joint, ces pavés étant séparés de la surface incurvée de raccordement à la lèvre interne du joint, en ce que le joint annulaire comporte sur sa face arrière une surface transversale plane formant une couronne annulaire continue, située radialement entre les pavés et la surface incurvée de raccordement, ces pavés étant en saillie axialement vers l'arrière par rapport à cette couronne annulaire et en ce que la couronne annulaire plane est radialement alignée avec le fond des rainures. e

Un avantage essentiel du joint annulaire selon l'invention, est que l'électrode d'électroérosion qui sert à la formation dans le moule des cavités correspondant aux pavés précités de la face arrière du joint, peut être légèrement décentrée par rapport aux surfaces d'étanchéité dynamiques, sans nuire à ces surfaces.

L'invention propose aussi un joint annulaire d'étanchéité à lèvres pour un maître cylindre du type décrit ci-dessus, ce joint comportant une lèvre interne d'étanchéité dynamique raccordée par une surface incurvée à une face arrière plane comprenant des canaux radiaux, **caractérisé en ce que** les canaux radiaux sont définis par des pavés formés en saillie sur la face arrière du joint, ces pavés étant séparés de la surface incurvée de raccordement à la lèvre interne du joint.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue en perspective d'un joint annulaire selon l'art antérieur ;
- la figure 2 est une demi-coupe axiale de ce joint annulaire, suivant le plan II-II ;
- la figure 3 est une demi-coupe axiale agrandie d'une partie de ce joint annulaire en appui sur le piston d'un maître cylindre ;
- la figure 4 est une vue en perspective d'un joint annulaire selon l'invention ;
- la figure 5 est une demi-coupe axiale de ce joint annulaire, suivant le plan V-V ;
- la figure 6 est une demi-coupe axiale agrandie d'une partie de ce joint annulaire, en appui sur le piston d'un maître cylindre.

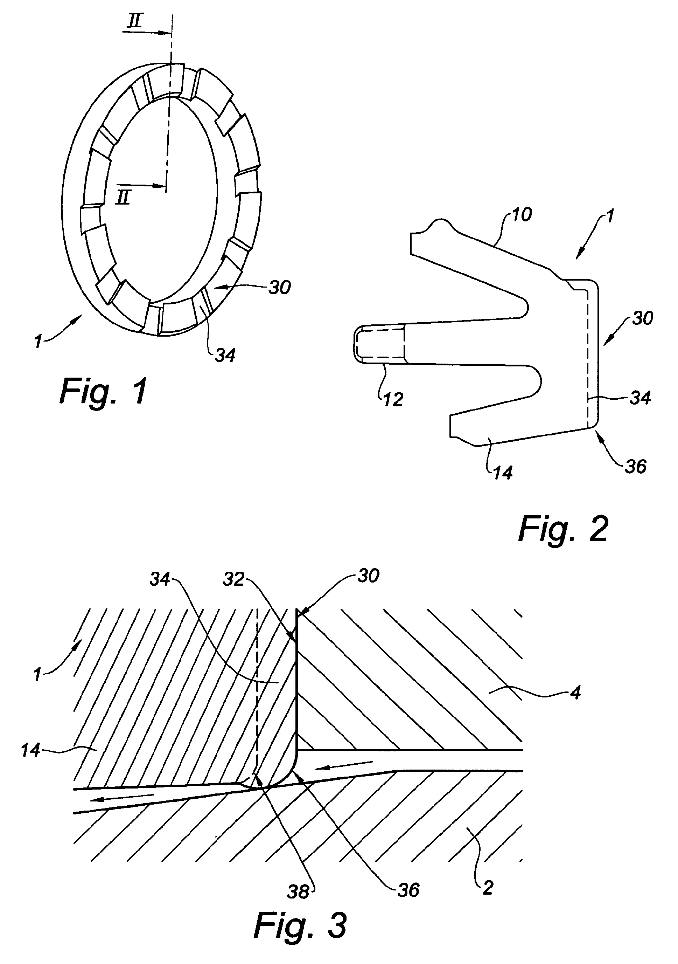

Les figures 1 à 3 représentent un joint annulaire connu 1 qui enserre un piston 2 coulissant axialement dans un corps 4 d'un maître cylindre de freinage.

Le joint annulaire 1 disposé dans un logement annulaire du corps 4, comporte une lèvre externe 10 dont l'extrémité s'appuie radialement sur une paroi cylindrique extérieure de ce logement, pour assurer une étanchéité statique, et une lèvre interne 14 dont l'extrémité s'appuie radialement sur la surface extérieure du piston 2, pour assurer une étanchéité dynamique lors du coulissement de ce piston.

Le joint annulaire 1 peut comporter aussi une lèvre axiale 12, radialement intermédiaire entre les lèvres externe 10 et interne 14, et dont l'extrémité est en appui sur une face avant sensiblement radiale du logement annulaire, pour assurer un calage axial de ce joint entre les deux faces avant et arrière du logement.

Le joint annulaire 1 comporte une face arrière 30 annulaire et sensiblement plane, qui s'appuie sur une surface transversale plane 32 située axialement à l'arrière du logement.

La face arrière 30 comprend une série de rainures radiales 34 réparties angulairement de manière régulière et s'étendant sur toute la hauteur du joint, qui forment autant de canaux radiaux permettant un passage de liquide radialement vers l'extérieur, entre la face arrière 30 du joint annulaire 1 et la surface transversale arrière 32 du logement recevant ce joint.

La face arrière radiale 30 du joint se raccorde à la surface inférieure de la lèvre interne 14, par une surface incurvée convexe 36.

Le moule correspondant à ce joint est fabriqué d'abord par des opérations de tournage pour finir toutes les surfaces circulaires, puis par une opération d'électroérosion avec une électrode, pour former les surfaces correspondant à la face 30 arrière du joint annulaire 1.

Un risque illustré en figure 3 est que, compte tenu des tolérances de fabrication, le positionnement de l'électrode présente un léger défaut de concentricité par rapport aux surfaces créées par tournage, ce qui peut causer localement un décalage de la surface 36 radialement vers l'axe, par rapport aux surfaces tournées comme la lèvre interne 14.

Dans ce cas, le point 38 de raccordement des rainures radiales 34 avec la lèvre interne 14, peut ne pas se trouver au contact du piston 2, ce qui crée un risque de fuite lors de la mise en pression du circuit de freinage.

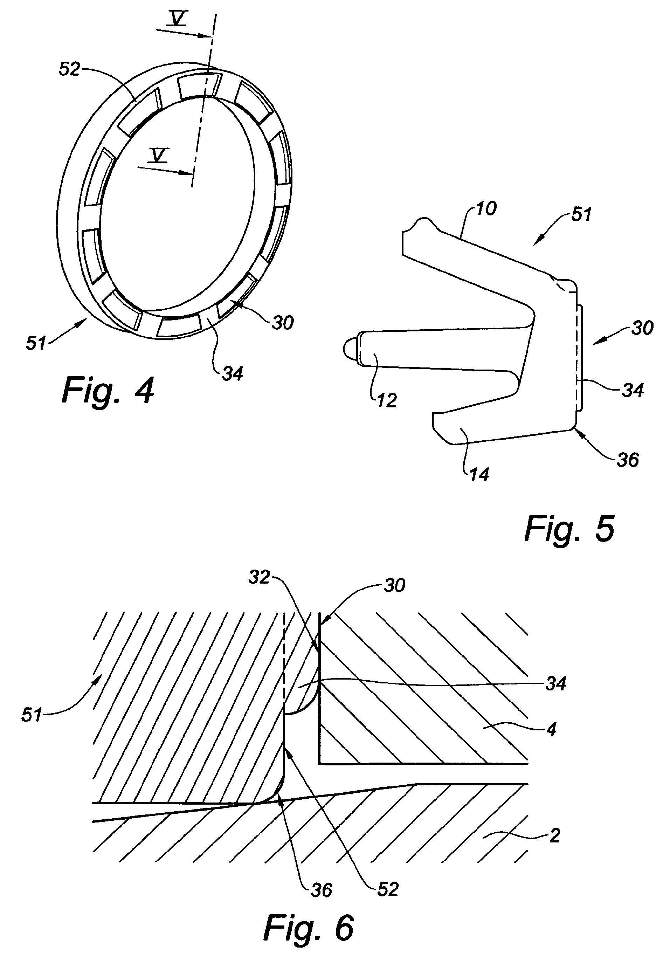

Les figures 4 à 6 représentent un joint 51 selon l'invention, qui comprend une lèvre externe 10, une lèvre interne 14 et une lèvre axiale 12 comme le joint connu des figures 1 à 3.

La face arrière 30 du joint annulaire 51 comporte une première surface annulaire plane comprenant les fonds de rainures radiales 34 réparties régulièrement, et une couronne continue transversale 52 située radialement vers le centre de cette face arrière et qui est raccordée à la lèvre 14 par une surface incurvée convexe 36.

La face arrière comporte de plus des pavés séparés de la surface incurvée 36, qui sont en saillie axialement vers l'arrière pour délimiter entre eux les rainures 34.

La fabrication du moule correspondant à ce joint est la suivante. On réalise d'abord par tournage les différentes parties circulaires, notamment la lèvre interne 14, la face plane comprenant la couronne transversale 52 ainsi que le fond des rainures radiales 34, et la surface de raccordement 36 les reliant.

Ensuite par une opération d'électroérosion avec une électrode, on creuse dans le moule les cavités qui vont former les pavés d'appui arrière du joint annulaire 51.

De cette manière, en séparant les pavés de la surface de raccordement 36, et même avec un défaut de concentricité de l'électrode creusant les cavités dans le moule, on n'a pas de risque de créer une interférence avec la surface 36, et de former une discontinuité au niveau de cette surface. On assure la continuité de la surface de raccordement 36 et de son appui sur le piston coulissant 2, ce qui garantit une bonne étanchéité dynamique avec ce piston.

De plus la fabrication du moule est facilitée et peut être réalisée plus simplement avec des exigences de tolérance réduites, ce qui est plus économique.

## Revendications

1. Maître cylindre d'un circuit hydraulique de freinage, en particulier pour véhicule automobile, comportant un piston (2) coulissant axialement dans un corps (4) comprenant un joint annulaire d'étanchéité à lèvres (51), ce joint comportant une lèvre interne (14) d'étanchéité dynamique enserrant le piston et raccordée par une surface incurvée (36) à une face arrière plane (30) comprenant des rainures (34) et s'appuyant sur une surface arrière transversale (32) du logement du joint, **caractérisé en ce que** les rainures (34) de la face arrière du joint sont définis par des pavés formés en saillie sur la face arrière du joint, ces pavés étant séparés de la surface incurvée convexe (36) de raccordement à la lèvre interne (14) du joint, **en ce que** le joint annulaire (51) comporte sur sa face arrière, une surface transversale plane formant une couronne annulaire continue (52), située radialement entre les pavés et la surface incurvée (36), les pavés étant en saillie axialement vers l'arrière par rapport à cette couronne annulaire (52), et **en ce que** la couronne annulaire (52) est radialement alignée avec le fond des rainures (34).

2. Maître cylindre selon la revendication 1, **caractérisé en ce que** le joint annulaire (51) est produit dans un moule dont la fabrication comporte successivement une opération de tournage pour réaliser la lèvre interne (14), la couronne annulaire (52) et la surface incurvée (36), et une opération d'électroérosion pour creuser dans le moule des cavités correspondant aux pavés du joint.

3. Joint annulaire d'étanchéité à lèvres (51) de maître cylindre du type décrit dans l'une des revendications précédentes, ce joint comportant une lèvre interne (14) d'étanchéité dynamique raccordée par une surface incurvée (36) à une face arrière plane (30) comprenant des canaux radiaux, **caractérisé en ce que** les canaux radiaux sont définis par des pavés formés en saillie sur la face arrière du joint, ces pavés étant séparés de la surface incurvée de raccordement (36).

4. Joint .selon la revendication 3, **caractérisé en ce qu'**il est réalisé par moulage.

## Claims

1. Master cylinder of a hydraulic braking circuit, particularly for a motor vehicle, comprising a piston (2) sliding axially in a body (4) comprising an annular lip seal (51), this seal comprising an internal, dynamic sealing, lip (14) surrounding the piston and connected by a curved surface (36) to a planar rear face (30) comprising grooves (34) and pressing against a transverse rear surface (32) of the seal housing, **characterized in that** the grooves (34) of the rear face of the seal are defined by blocks formed as projections on the rear face of the seal, these blocks being separated from the convex curved surface (36) for connection to the internal lip (14) of the seal, **in that** the annular seal (51) comprises on its rear face a planar transverse surface forming a continuous annular ring (52) situated radially between the blocks and the curved surface (36), the blocks projecting axially rearward with respect to this annular ring (52), and **in that** the annular ring (52) is radially aligned with the bottom of the grooves (34).

2. Master cylinder according to Claim 1, **characterized in that** the annular seal (51) is produced in a mold the manufacture of which involves in succession a turning operation to create the internal lip (14), the annular ring (52) and the curved surface (36), and an operation of EDM machining to cut cavities in the mold corresponding to the blocks of the seal.

3. Annular lip seal (51) of a master cylinder of the type described in one of the preceding claims, this seal comprising an internal, dynamic sealing, lip (14) connected by a curved surface (36) to a planar rear face (30) comprising radial passages, **characterized in that** the radial passages are defined by blocks formed as projections on the rear face of the seal, these blocks being separated from the curved connecting surface (36).

4. Seal according to Claim 3, **characterized in that** it is produced by molding.

## Patentansprüche

1. Hauptzylinder eines hydraulischen Bremskreises, insbesondere für ein Kraftfahrzeug, der einen Kolben (2) umfasst, der axial in einem Körper (4) gleitet, der eine Lippenringdichtung (51) umfasst, die eine dynamische innere Dichtlippe (14) umfasst, die den Kolben umgibt und durch eine gekrümmte Fläche (36) mit einer planaren Hinterseite (30) verbunden ist, die Nuten (34) aufweist und an einer hinteren Querfläche (32) der Dichtungsaufnahme anliegt, **dadurch gekennzeichnet, dass** die Nuten (34) der Hinterseite der Dichtung durch auf der Hinterseite der Dichtung vorragend ausgebildete Blöcke definiert sind, wobei diese Blöcke von der konvex gekrümmten Fläche (36) zur Verbindung mit der inneren Dichtlippe (14) beabstandet sind, dass die Ringdichtung (51) auf ihrer Hinterseite eine planare Querfläche umfasst, die einen durchgängigen ringförmigen Kranz (52) bildet, der zwischen den Blöcken und der gekrümmten Fläche (36) radial verläuft, wobei die Blöcke bezüglich dieses ringförmigen Kranzes (52) nach hinten axial vorragen, und dass der ringförmige Kranz (52) zum Grund der Nuten (34) radial ausgerichtet ist.

2. Hauptzylinder nach Anspruch 1, **dadurch gekennzeichnet, dass** die Ringdichtung (51) in einem Formwerkzeug hergestellt wird, dessen Herstellung einen Drehvorgang zum Ausbilden der inneren Lippe (14), des ringförmigen Kranzes (52) und der gekrümmten Fläche (36) und einen nachfolgenden Funkenerosionsvorgang zum Ausbilden von den Blöcken der Dichtung entsprechenden Vertiefungen in dem Formwerkzeug umfasst.

3. Ringförmige Lippendichtung (51) eines in einem der vorhergehenden Ansprüche beschriebenen Hauptzylinders, wobei die Dichtung eine dynamische innere Dichtlippe (14) umfasst, die durch eine gekrümmte Fläche (36) mit einer planaren Hinterseite (30) verbunden ist, die radiale Kanäle aufweist, **dadurch gekennzeichnet, dass** die radialen Kanäle durch auf der Hinterseite der Dichtung vorragend ausgebildete Blöcke definiert sind, wobei diese Blöcke von der gekrümmten Verbindungsfläche (36) beabstandet sind.

4. Dichtung nach Anspruch 3, **dadurch gekennzeichnet, dass** sie durch Formen hergestellt wird.
